Europäisches Patentamt

European Patent Office

Office européen des brevets

(11) Numéro de publication : **0 116 796**
**B1**

(12) **FASCICULE DE BREVET EUROPÉEN**

(45) Date de publication du fascicule du brevet :
30.09.87

(21) Numéro de dépôt : 83402471.3

(22) Date de dépôt : 20.12.83

(51) Int. Cl.⁴ : **B 65 D 51/00**

(54) Bouchon antivol destiné, notamment, aux réservoirs de carburant de véhicules automobiles.

(30) Priorité : 07.01.83 FR 8300187

(43) Date de publication de la demande :
29.08.84 Bulletin 84/35

(45) Mention de la délivrance du brevet :
30.09.87 Bulletin 87/40

(84) Etats contractants désignés :
BE DE FR GB IT NL

(56) Documents cités :
DE-B- 1 152 957
FR-A- 1 517 883
FR-A- 2 356 855

(73) Titulaire : **Journée, Paul Jean Pierre**
**St. Germer Reilly**
**F-60240 Chaumont-en-Vexin (FR)**

(72) Inventeur : **Journée, Paul Jean Pierre**
**St. Germer Reilly**
**F-60240 Chaumont-en-Vexin (FR)**

(74) Mandataire : **Dawidowicz, Armand**
**30, Boulevard du Château**
**F-92200 Neuilly (FR)**

## Description

La présente invention est relative à un bouchon antivol destiné, notamment, aux réservoirs de carburant de véhicules automobiles, réservoirs dont l'orifice de remplissage est constitué par un embout tubulaire présentant une surface d'appui en forme de couronne et, sous ladite surface, deux rampes hélicoïdales, le corps dudit bouchon antivol étant appliqué contre ladite surface d'appui avec interposition d'un joint, réalisé en une matière élastomère, sous l'action conjuguée d'un ressort et d'une barrette de verrouillage rotative qui prend appui, lors de sa rotation, sous les rampes précitées, des extensions radiales solidaires dudit corps assurant l'immobilisation du corps du bouchon en rotation, par rapport à l'embout, la rotation de la barrette de verrouillage étant liée à celle d'un barillet, actionné par une clé usuelle, logé dans une queue axiale du bouchon et pouvant être immobilisé en rotation dans ladite queue selon deux positions angulaires.

Un tel bouchon est connu par le brevet FR-A-1 517 883.

De tels bouchons, qui assurent une fermeture étanche du réservoir, posent des problèmes notamment lorsqu'ils sont utilisés sur des réservoirs contenant un liquide qui est prélevé par un autre orifice et/ou qui dégage des gaz. C'est le cas, notamment, des réservoirs d'essence de véhicules automobiles.

En effet, du fait de la consommation d'essence, une dépression se crée dans le réservoir et il faut rétablir l'équilibre. Par ailleurs, les gaz dégagés doivent pouvoir s'échapper librement pour éviter une surpression à l'intérieur du réservoir.

Le brevet FR-A-1 517 883 précité prévoit d'assurer une mise en communication de l'intérieur du réservoir avec l'atmosphère par un chemin labyrinthique ménagé dans le couvercle. Un tel chemin labyrinthique n'interdit cependant pas la sortie du liquide contenu dans le réservoir en cas d'inclinaison excessive ou même de renversement, tel qu'ils peuvent se produire lors d'un accident d'un véhicule automobile comportant un tel réservoir de carburant. Le carburant ainsi épandu devient alors une source d'incendie et même d'explosion du réservoir.

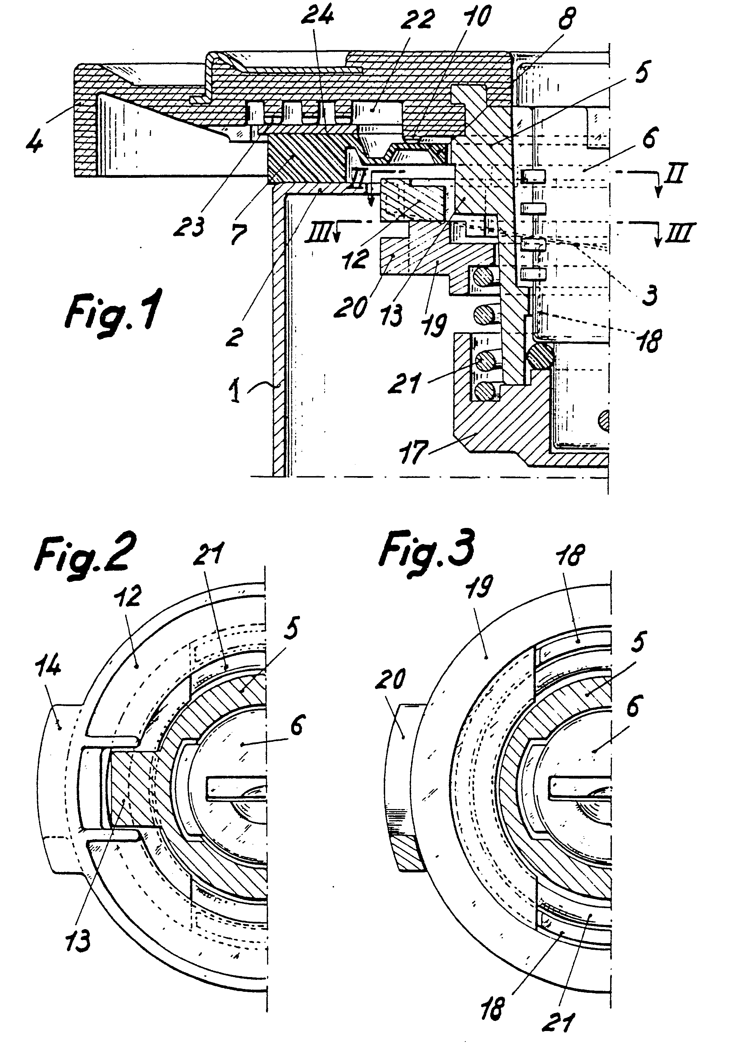

Dans le brevet FR-A-2 356 855, en plus du labyrinthe précité, est prévue une soupape à membrane permettant d'absorber les dépressions à l'intérieur du réservoir (figures 1 à 4), et fermant normalement ledit labyrinthe. Une telle soupape nécessite l'installation supplémentaire d'une membrane qui, par ailleurs, a tendance à s'écarter de son siège lorsque le réservoir est renversé. Ce bouchon présente donc le même risque dans ce cas que le bouchon antivol selon le brevet FR-A-1 517 883.

La présente invention vise en conséquence à fournir un bouchon antivol selon l'introduction (connu de FR-A-1 517 883) ne présentant pas les inconvénients des bouchons antivols selon l'état de la technique cité.

A cet effet, le bouchon antivol selon l'invention est caractérisé par le fait que lesdites extensions radiales sont ménagées sur une rondelle fixe en rotation par rapport au corps du bouchon et écartée axialement de celui-ci, le joint présente une lèvre centrale et souple logée dans l'intervalle axial entre le corps du bouchon et la rondelle, ladite lèvre ménageant un espace annulaire entre sa périphérie intérieure et la périphérie extérieure de ladite queue solidaire du corps et contenant ledit barillet, et s'appliquant élastiquement par sa face supérieure contre un épaulement du corps présentant une fente de très petite section et formant, en coopération avec la face supérieure de la lèvre un canal capillaire laissant échapper les vapeurs sans toutefois laisser fuir le carburant.

Lorsqu'une dépression se crée dans le réservoir en raison de la consommation d'essence, la lèvre du joint élastomère s'infléchit en laissant un espace entre elle et l'épaulement du bouchon et permet ainsi à l'air d'entrer. Lorsque l'équilibre des pressions interne et externe est rétabli, la lèvre s'applique à nouveau élastiquement contre l'épaulement précité, à l'instar d'un clapet sur un siège, empêchant ainsi les fuites du carburant contenu dans le réservoir.

L'invention sera mieux comprise par la description qui va suivre faite en se référant aux dessins annexés à titre d'exemple indicatif seulement, sur lesquels :

La figure 1 est une demi-vue en coupe montrant le bouchon posé sur l'embout usuel d'un réservoir.

La figure 2 est une vue en coupe effectuée selon la ligne II-II de la figure 1.

La figure 3 est une vue en coupe effectuée selon la ligne III-III de la figure 1.

La figure 4 est une vue analogue à celle 1 montrant le bouchon verrouillé sur l'embout d'un réservoir.

La figure 5 est une vue analogue à celle 4 montrant la position de la lèvre du joint lorsqu'une dépression se crée dans le réservoir.

La figure 6 est une vue partielle en perspective montrant vu du dessous, le corps de bouchon et sa queue centrale.

En se reportant aux dessins, on voit que 1 est l'embout usuel d'un réservoir présentant une collerette interne 2 se recourbant vers l'intérieur pour former des rampes 3, hélicoïdales.

De la façon connue, le corps 4 du bouchon présente une queue 5 axiale dans laquelle est logé un barillet 6 pouvant être manœuvré à l'aide d'une clé usuelle.

La mise en place du bouchon s'effectue avec interposition d'un joint 7, réalisé en une matière élastomère, présentant centralement une lèvre 8, souple, ménageant un jeu 9 entre elle et la queue 5.

La lèvre 8 est normalement appliquée par sa face supérieure sous un épaulement de la queue par l'entremise d'un bourrelet 10 de ce dernier.

Le bourrelet 10 présente une fente 11, de très petite section, déterminée en fonction de la forme et des dimensions du réservoir, formant en coopération avec la face supérieure de la lèvre 8 du joint un canal capillaire laissant échapper les vapeurs sans toutefois laisser fuir le carburant.

L'immobilisation en rotation du bouchon 4 est obtenue à l'aide d'une rondelle 12, liée en rotation à la queue 5 par l'entremise d'une extension radiale 13 de celle-ci, ladite rondelle présentant au moins une extension radiale 14 susceptible d'être engagée, lors de la mise en place du bouchon, dans le cran usuel 15 de l'embout 1.

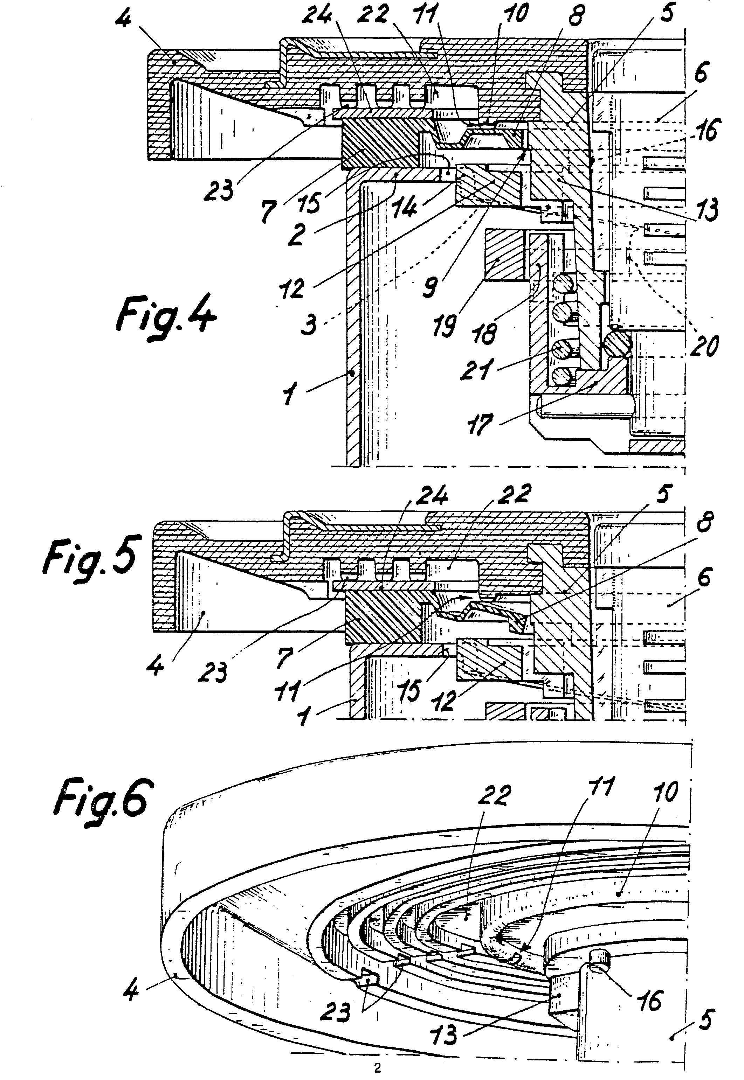

La rondelle 12 est maintenue écartée de la lèvre 8 par l'entremise de bossages 16 prévus sous un épaulement de la queue 5 (figure 6).

Le barillet 6 entraîne une cuvette 17 présentant deux extensions axiales 18 traversant une rondelle 19 pourvue de doigts radiaux 20 (figure 1) susceptibles, lors de la rotation du barillet, de prendre appui sous les rampes hélicoïdales 3 de l'embout 1 en comprimant un ressort 21 interposé entre ladite rondelle et la cuvette 17.

La fente 11 débouche dans une rainure circulaire 22 du corps 4 du bouchon communiquant avec l'extérieur par l'entremise de canaux formés par la coopération de rainures 23 radiales et de la face supérieure du joint 7.

Comme montré sur les dessins, une rondelle 24 est interposée entre le corps du bouchon et le joint 7. Cette rondelle permet, notamment, par un choix judicieux de son épaisseur de régler la force d'appui de la lèvre 8 du joint contre le bourrelet 10.

Les gaz résultant de l'évaporation du carburant et créant une surpression à l'intérieur du réservoir, sont évacués par la fente 11 en empruntant au préalable l'espace annulaire 9 ménagé entre la lèvre 8 du joint et la queue 5.

Lorsqu'une dépression se crée à l'intérieur du réservoir, la lèvre 8 fléchit (comme montré sur la figure 5) et l'air pénètre dans le réservoir par les rainures 23, par celle 22, entre le bourrelet 10 et ladite lèvre et par l'espace annulaire 9.

Par ailleurs, si pour une raison quelconque la pression à l'intérieur du réservoir augmente brusquement de façon importante (déformation due à un choc) la force créée par celle-ci et qui s'applique sur la cuvette 17 repousse le bouchon 4 par l'entremise de la queue 5 qui est en contact par son extrémité avec le fond de ladite cuvette et le bouchon se soulève en comprimant le ressort 21. Un espace est alors créé entre le joint et le bouchon et/ou le joint et la collerette d'appui de l'embout 1.

**Revendications**

1. Bouchon antivol destiné, notamment, aux réservoirs de carburant de véhicules automobiles, réservoirs dont l'orifice de remplissage est constitué par un embout tubulaire (1) présentant une surface d'appui (2) en forme de couronne et, sous ladite surface, deux rampes hélicoïdales (3), le corps (4) dudit bouchon antivol étant appliqué contre ladite surface d'appui (2) avec interposition d'un joint (7), réalisé en une matière élastomère, sous l'action conjuguée d'un ressort (21) et d'une barrette (19, 20) de verrouillage rotative qui prend appui, lors de sa rotation, sous les rampes précitées (3), des extensions radiales (14) solidaires dudit corps (4) assurant l'immobilisation du corps (4) du bouchon en rotation, par rapport à l'embout (1), la rotation de la barrette de verrouillage (19, 20) étant liée à celle d'un barillet (6), actionné par une clé usuelle, logé dans une queue axiale (5) du bouchon et pouvant être immobilisé en rotation dans ladite queue (5) selon deux positions angulaires, caractérisé par le fait que lesdites extensions radiales (14) sont ménagées sur une rondelle (12) fixe en rotation par rapport au corps (4) du bouchon et écartée axialement de celui-ci, le joint (7) présente une lèvre (8) centrale et souple logée dans l'intervalle axial entre le corps (4) du bouchon et la rondelle (12), ladite lèvre (8) ménageant un espace annulaire entre sa périphérie intérieure et la périphérie extérieure de ladite queue (5) solidaire du corps (4) et contenant ledit barillet (6), et s'appliquant élastiquement par sa face supérieure contre un épaulement (10) du corps (4) présentant une fente (11) de très petite section et formant, en coopération avec la face supérieure de la lèvre (8) un canal capillaire laissant échapper les vapeurs sans toutefois laisser fuir le carburant.

2. Bouchon antivol destiné, notamment, aux réservoirs de carburant de véhicules automobiles, selon la revendication 1, caractérisé en ce que la fente (11) débouche dans une rainure (22) du corps (4) du bouchon reliée à l'air libre par des rainures (23) radiales, prévues dans ledit corps (4) du bouchon.

3. Bouchon antivol destiné, notamment, aux réservoirs de carburant de véhicules automobiles, selon l'une quelconque des revendications 1 et 2, caractérisé en ce qu'une rondelle (24) est interposée entre le corps (4) du bouchon et le joint (7).

4. Bouchon antivol destiné, notamment, aux réservoirs de carburant de véhicules automobiles, selon l'une quelconque des revendications 1 à 3, caractérisé en ce que la rondelle (12), portant les organes de verrouillage du bouchon, est entraînée par une cuvette (17) sur laquelle elle peut coulisser en comprimant un ressort (21), ladite cuvette étant liée en rotation au barillet usuel.

5. Bouchon antivol destiné, notamment, aux réservoirs de carburant de véhicules automobiles, selon la revendication 4, caractérisé en ce que la cuvette (17) prend appui par son fond contre l'extrémité de la queue (5) du bouchon.

**Claims**

1. Anti-theft stopper intended, notably, for the fuel tanks of automobiles, these tanks having a filling orifice which is constituted of a tubular end-piece (1) possessing a bearing surface (2) in the form of a ring and, below said surface, two helical skews (3), the body (4) of said anti-theft stopper being applied onto said bearing surface (2) with the interposition of a seal (7), formed of an elastomer material, under the combined action of a spring (21) and of a rotary locking bar (19, 20) which bears, during its rotation, beneath the aforementioned skews (3), radial extensions (14) integral with said body (4) ensuring the immobilization of the body (4) of the stopper in rotation relative to the end-piece (1), the rotation of the locking bar (19, 20) being linked to that of a barrel (6), operated by a conventional key, the barrel being seated in an axial tail (5) of the stopper and being able to be immobilized in rotation in said tail (5) in two angular positions, characterized by the fact that said radial extensions (14) are formed on a ring (12) fixed in rotation relative to the body (4) of the stopper and axially separated therefrom, the seal (7) possessing a central flexible lip (8) seated in the axial space between the body (4) of the stopper and the ring (12), said lip (8) forming an annular space between its internal periphery and the external periphery of said tail (5) integral with the body (4) and containing said barrel (6), and bearing elastically by its upper face against a shoulder (10) of the body (4) possessing a slit (11) of very small cross-section and forming, in cooperation with the upper face of the lip (8), a capillary channel permitting the vapours to escape without, however, allowing the fuel to leak out.

2. Anti-theft stopper intended, notably, for the fuel tanks of automobiles, according to Claim 1, characterized in that the slit (11) leads into a groove (22) of the body (4) of the stopper, the groove being connected to atmosphere by radial grooves (23) formed in said body (4) of the stopper.

3. Anti-theft stopper intended, notably, for the fuel tanks of automobiles, according to any one of Claims 1 and 2, characterized in that a washer (24) is interposed between the body (4) of the stopper and the seal (7).

4. Anti-theft stopper intended, notably, for the fuel tanks of automobiles, according to any one of Claims 1 to 3, characterized in that the ring (12), carrying the locking members of the stopper, is driven by a bowl (17), on which it may slide by compressing a spring (21), said bowl being linked in rotation to the usual barrel.

5. Anti-theft stopper intended, notably, for the fuel tanks of automobiles, according to Claim 4, characterized in that the bowl (17) bears by its base against the end of the tail (5) of the stopper.

### Patentansprüche

1. Diebstahlsicherer Deckel für insbesondere Kraftstoffbehälter von Kraftfahrzeugen, bei welchen Kraftstoffbehältern der Einfüllstutzen aus einem rohrförmigen Ansatz (1) besteht, der eine kronenförmige Stützfläche (2) und darunter zwei schraubenförmige schiefe Ebenen (3) aufweist, wobei der Körper (4) des diebstahlsicheren Deckels gegen die Stützfläche (2) über eine aus Elastomermaterial hergestellte Dichtung (7) unter der gemeinsamen Wirkung einer Feder (21) und eines Drehverriegelungsstegs (19, 20) gedrückt wird, der sich bei seiner Drehung unter den erwähnten schiefen Ebenen (3) abstützt, wobei radiale Verlängerungen (14) in fester Verbindung mit dem genannten Körper (4) für ein Feststellen des Körpers (4) des Deckels in Drehung in bezug auf den Ansatz (1) sorgen und die Drehung des Verriegelungsstegs (19, 20) an die eines Zylinders (6) gebunden ist, der von einem üblichen Schlüssel betätigt wird und in einem axialen Endstück (5) des Deckels sitzt und darin in Drehung nach zwei Winkelstellungen festgesetzt werden kann, dadurch gekennzeichnet, dass die Radialverlängerungen (14) an einer Scheibe (12) angebracht sind, die in bezug auf den Körper (4) des Deckels in Drehung fest und axial von diesem abgesetzt ist, dabei weist die Dichtung (7) eine mittige weiche Lippe (3) auf, die in einem axialen Zwischenraum zwischen dem Körper (4) des Deckels und der Scheibe (12) sitzt, wobei die genannte Lippe (8) einen ringförmigen Raum zwischen ihrem Innenumfang und dem Aussenumfang des genannten Endstücks (5) in fester Verbindung mit dem Körper (4), der den genannten Zylinder (6) enthält, ausspart und sich elastisch mit ihrer oberen Fläche gegen eine Schulter (10) des Körpers (4) legt, die einen Spalt (11) mit sehr kleinem Querschnitt aufweist, der in Zusammenwirkung mit der oberen Fläche der Lippe (8) einen Kapillarkanal bildet, der die Dämpfe entweichen lässt, ohne jedoch dem Kraftstoff eine Austrittsmöglichkeit zu bieten.

2. Diebstahlsicherer Deckel insbesondere für Kraftstoffbehälter von Kraftfahrzeugen nach Anspruch 1, dadurch gekennzeichnet, dass der Spalt (11) in eine Nut (22) des Körpers (4) des Deckels mündet, die über Radialnuten (23), die im genannten Körper (4) des Deckels vorgesehen sind, mit der freien Luft in Verbindung steht.

3. Diebstahlsicherer Deckel insbesondere für Kraftstoffbehälter von Kraftfahrzeugen nach einem der vorhergehenden Ansprüche, dadurch gekennzeichnet, dass eine Scheibe (24) zwischen dem Körper (4) des Deckels und der Dichtung (7) eingesetzt ist.

4. Diebstahlsicherer Deckel insbesondere für Kraftstoffbehälter von Kraftfahrzeugen nach einem der vorhergehenden Ansprüche, dadurch gekennzeichnet, dass die Scheibe (12), die die Verriegelungsorgane des Deckels trägt, durch einen Napf (17) mitgenommen wird, auf dem sie gleiten kann und dabei eine Feder (21) zusammendrückt, wobei der genannte Napf in Drehung mit dem üblichen Zylinder verbunden ist.

5. Diebstahlsicherer Deckel insbesondere für Kraftstoffbehälter von Kraftfahrzeugen nach Anspruch 4, dadurch gekennzeichnet, dass der Napf (17) sich mit seinem Boden gegen das Ende des Endstücks (5) des Deckels abstützt.

0 116 796

Fig.1

Fig.2

Fig.3

1

0 116 796

Fig.4

Fig.5

Fig.6